# EUROPÄISCHE PATENTSCHRIFT

(11) **EP 3 942 172 B1**
(45) Veröffentlichungstag und Bekanntmachung des Hinweises auf die Patenterteilung: **01.02.2023**
(21) Anmeldenummer: 20821113.6
(22) Anmeldetag: 12.11.2020
(51) Int. Cl.: F02G 1/043

(54) **STIRLINGMOTOR**
STIRLING ENGINE
MOTEUR STIRLING

(30) Priorität: 02.03.2020 DE 202020000844 U
(43) Veröffentlichungstag der Anmeldung: 26.01.2022
(73) Patentinhaber: Benz, Jochen, 78315 Radolfzell (DE)
(72) Erfinder: Benz, Jochen, 78315 Radolfzell (DE)
(74) Vertreter: Neidl-Stippler, Cornelia
(86) Internationale Anmeldenummer: PCT/DE2020/100966
(87) Internationale Veröffentlichungsnummer: WO 2021/175353

(56) Entgegenhaltungen:
- EP-A1- 3 146 190
- DE-A1- 3 502 363
- DE-A1- 10 139 345
- DE-A1-102014 006 362

## Beschreibung

Die Erfindung betrifft einen Stirlingmotor nach dem Oberbegriff des Anspruchs 1. Er besitzt mindestens einen Verdrängerzylinder mit einem eine heiße Platte aufweisenden Bereich für das heiße Arbeitsgas (H) und einem eine kalte Platte aufweisenden Bereich für das kalte Arbeitsgas (C und einem zwischen diesen Bereichen entlang einer Verdrängerachse bewegbaren Verdrängerkolben, mindestens einen mit dem mindestens einen Verdrängerzylinder über mindestens eine Gasleitung verbundenen Arbeitszylinder mit einem Arbeitskolben. Durch oszillierende Linearbewegung jedes Verdrängerkolbens im jeweiligen Verdrängerzylinder mit einer heißen und einer kalten Platte wird das eingeschlossene Arbeitsgas abwechselnd erhitzt und wieder abgekühlt. Die dadurch entstehenden Druckänderungen des Arbeitsgases werden über mindestens eine Gasleitung dem mindestens einen zugeordneten Arbeitszylinder zugeführt und wirken dort auf den entlang der Arbeitsachse des Arbeitszylinders bewegbaren Arbeitskolben. Zum Umsetzen der Bewegung des Arbeitskolbens in Leistung ist eine Bewegungsumsetzeinrichtung vorgesehen. Zum Antrieb der Bewegung des Verdrängerkolbens dient eine Linearbewegungseinrichtung, wobei diese beiden Bewegungsumsetzeinrichtungen auch miteinander gekoppelt sein können, bspw. in Form eines Kurbeltriebs.

Stirlingmotoren, auch Heißgasmotoren genannt, sind schon lange bekannt und setzen Wärmeenergie in mechanische Energie um. Zur Vermeidung von Wiederholungen wird vollinhaltlich Bezug genommen auf das Fachbuch: "Stirlingmotoren - Thermodynamische Grundlagen, Kreisprozessrechnung und Niedertemperatur- und Freikolbenmotoren" von Frank Schleder sowie darin genannte Werke, die dem Fachmann bekannt sind.

Der Anmelder hat bereits einen Niedertemperatur Mehrzylinder-Stirlingmotor entwickelt, der bereits bei relativ tiefen Temperaturen des Wärmeenergieträgers (zwischen 80 und 100°C) Energie aus Wärme, bspw. Abwärme oder von durch Sonnenergie aufgeheizten Körpern, gewinnen kann und dafür das EP 3146190B1 erteilt bekommen.

Zur Erzeugung von Strom aus Abwärme, aber auch zur Kälteerzeugung, sind Stirlingmotoren ideal geeignet.

Insbesondere die Verstromung von Abwärme im Niedertemperaturbereich (unter 150 °C) ist sowohl aus ökonomischer als auch aus ökologischer Sicht ein sehr interessantes Einsatzgebiet, denn Abwärme in diesem Temperaturbereich wird bisher größtenteils ungenutzt an die Umwelt abgeführt. Der Betreiber gewinnt wertvollen Strom aus bisher ungenutzter Abwärme und dieser Strom muss nicht aus fossilen oder atomaren Brennstoffen erzeugt werden, was die Umwelt entlastet. Dabei ist es sinnvoll, wenn die Temperatur der kalten Platte im Raumtemperaturbereich, ggf. auch darunter, liegt.

Eines der größten Probleme bei Stirlingmotoren, insbesondere bei Niedertemperatur-Stirlingmotoren ist jedoch die Abdichtung der Kolbenstangen, die einen Durchbruch durch den Zylinderkopf oder -fuß benötigen. Gefordert wird von der Abdichtung der Kolbenstangen minimale Reibung und gleichzeitig maximale Dichtheit, was direkt miteinander konkurriert. Eingesetzt werden derzeit sehr teure, verschleißbehaftete Kolbenstangendichtungen, deren Dichtungssitz auch noch extrem präzise gearbeitet werden muss. Auch die Zentrierung der in den Arbeits- und Verdrängerzylindern bewegten Arbeits- und Verdrängerkolben ist nicht unproblematisch.

In der DE 10 2014 006 362 A1 wird ein Stirlingmotor mit nur einem Verdrängerzylinder und einem Freikolben-Verdränger (ohne Kolbenstange) beschrieben.

Die DE 11 2015 000 894 T5 beschreibt eine thermisch betriebene Wärmepumpe mit mehreren Freikolben-Verdrängern, d.h. ohne Kolbenstange.

Bei der US 6 279 318 B1 handelt es sich um eine Wärmekraftmaschine in Form einer Freikolbenmaschine, die sich vor allem dadurch auszeichnet, dass sie aus 2 Zylindern besteht, einem inneren und einem äußeren, die konzentrisch angeordnet sind.

Die Patentschrift EP 3 146 190 B1 betrifft einen Mehrzylinder-Stirlingmotor mit mindestens zwei, jeweils einen gemeinsamen heißen Bereich oder einen gemeinsamen kalten Bereich aufweisenden Doppelzylinder-Stirlingmotoren.

Schwierig ist bei Niedertemperatur-Stirlingmotoren auch die Temperierung der heißen Platte, welche kontinuierlich die Wärmemenge, die in Bewegungsenergie umgesetzt werden soll, aufnehmen muss. Ebenso die Entwärmung der kalten Platte, welche die ihr im Rahmen des Stirling-Prozesses zugeführte Wärme abnehmen muss und auch als Kältemaschinenteil wirken kann, falls der Stirlingmotor als Kältemaschine extern angetrieben wird..

Es ist daher Aufgabe der Erfindung, Nachteile der bekannten Stirlingmotoren zu vermeiden.

Die Aufgabe wird erfindungsgemäß durch die Merkmale des Patentanspruchs 1 gelöst. Vorteilhafte Weiterbildungen ergeben sich aus den abhängigen Ansprüchen.

Dadurch, dass der Verdrängerzylinder als Hohlmantelzylinder ausgebildet ist, in dem konzentrisch ein ringförmiger Verdrängerkolben verschieblich angeordnet ist und in der zylindrischen zentralen Durchgangsöffnung des Hohlmantelzylinders die Verdrängerkolbenstange verschieblich geführt und an den ringförmigen Verdrängerkolben im Verdrängerzylinder über mindestens einen Ringmagneten oder ringsymmetrisch angeordnete Magnete angekoppelt ist, kann die bekanntermaßen aufwändige Abdichtung des Verdrängerzylinders entfallen.

Bewegt man den Verdrängerkolben mittels Magnetkraft im ringförmigen Verdränger-Zylinderraum, kann der gesamte Zylinderraum hermetisch nach außen abgedichtet werden und die Notwendigkeit zur Abdichtung der Kolbenstange entfällt.

Die für den Stirling-Prozess notwendige oszillierende Bewegung des Verdrängerkolbens kann, wie bekannt, durch eine mechanische Kopplung der Verdränger-Kolbenstange an den mindestens einen Arbeitskolben mittels einer Bewegungsumsetzeinrichtung - bspw. in Form eines an sich bekannten Kurbeltriebs, bestehend aus Drehwelle, Kurbelrädern. Gelenkeinrichtung und Pleueln erfolgen.

Es ist aber auch möglich, dass der Verdrängerkolben oszillatorisch über einen elektrischen Linearantrieb (bspw. Linearmotor oder Rotationsmotor mit Bewegungsumsetzeinrichtung oder 2 Elektromagnete), der seine Energieversorgung extern oder als Teil der im Arbeitskolben generierten Energie erhält, angetrieben wird. Der zugeordnete Arbeitskolben folgt dann, wie von Freikolbenmotoren bekannt, automatisch der Oszillations-Frequenz des Verdrängerkolbens mit einem Taktversatz von ca. 90°. In diesem Fall dient die Bewegungsumsetzeinrichtung lediglich der Umsetzung der translatorischen Bewegung des Arbeitskolbens zur Energiegewinnung.

Die vom Arbeitskolben generierte Translationsenergie wird zumindest teilweise in eine andere Energieform umgewandelt, bspw. in elektrische oder potentielle Energie, die gespeichert oder verbraucht wird.

Bei einer bevorzugten Ausführungsform weist der Arbeitskolben einen längsachssymmetrischen magnetischen oder magnetisierbaren Bereich auf, der mit mindestens einem auf der Arbeitszylinderaußenwand verschieblich angeordneten magnetischen oder magnetisierbaren Kopplungsteil magnetisch gekoppelt ist, welcher mechanisch mit der Bewegungsumsetzeinrichtung verbunden ist, von der ein Generator angetrieben wird.

Durch eine magnetischen Kopplung des Arbeitskolbens entfällt auch beim Arbeitszylinder das bisher aufwändige Abdichten der Arbeitszylinders-Kolbenstange und damit auch viele Verschleißerscheinungen.

Auch kann der Arbeitszylinder einen Arbeitskolben aufweisen, der mindestens einen dauermagnetischen Außenbereich aufweist, wobei eine Generator-Drahtwicklung aus leitfähigem Material auf der diamagnetischen bis unmagnetisierbaren Arbeitszylinderaußenwand angeordnet ist und so bei Bewegung des Arbeitskolbens dessen Bewegungsenergie außerhalb des dichten Arbeitszylinders abgegriffen und weiterverwendet wird.

Bei einer anderen Ausführungsform der Erfindung weist der Arbeitszylinder einen Arbeitskolben auf, dessen Arbeitszylinder-Kolbenstange einen magnetischen freien Endbereich aufweist, der in einer Generatordrahtwicklung aus leitfähigem Material unter Stromerzeugung durch das Arbeitsgas hin- und herbewegbar ist.

Auch kann der Arbeitszylinder eine Zahnstange, die an den Arbeitskolben mittels Magnetkraft oder über eine Kolbenstange gekoppelt ist, in eine oszillierende Bewegung versetzen, welche über ein Ritzel einen Generator antreibt, der damit Wechselstrom erzeugt.

Es ist günstig, dass die heiße Platte durch Wärmerohre mit Wärme versorgt wird und/oder die kalte Platte durch Wärmerohre entwärmt wird, denn so kann in einfacher Weise Wärmeenergie ohne aufwändige Wärmeträgermediumpumpen in den und aus dem Stirlingmotor transferiert werden. Falls sehr schneller Wärmetransport und -verteilung benötigt wird, können auch Dampfkammern oder Vapor Chambers die kalte und/oder heiße Platte kühlen bzw. erhitzen.

Bei einer bevorzugten Ausführungsform ist der Stirlingmotor ein Mehrzylinder-Stirlingmotor mit mindestens einem, eine gemeinsame heiße Platte und/oder eine gemeinsame kalte Platte aufweisenden Verdränger-Doppelzylinder, der ein Paar von einander spiegelsymmetrisch bezogen auf eine sich senkrecht zu einer Verdrängerachse erstreckenden Spiegelebene gegenüberliegenden Verdrängerzylindern aufweist, wobei den beiden Verdrängerzylindern eines Verdränger-Doppelzylinders
nach einer ersten Alternative ein gemeinsamer doppeltwirkender Arbeitszylinder zugeordnet ist oder
nach einer zweiten Alternative jeweils ein einfachwirkender Arbeitszylinder zugeordnet ist; oder
nach einer dritten Alternative mehrere Arbeitszylinder zugeordnet sind.

Nach der ersten Alternative hat der gemeinsame Arbeits-zylinder zwei durch den Arbeitskolben räumlich getrennte Gasräume, die jeweils gasleitend mit einem Gasraum eines unterschiedlichen Verdrängerzylinders verbunden sind, oder nach der zweiten Alternative sind die jeweiligen Gasräume der Verdrängerzylinder über mindestens eine Gasleitung mit einem jeweiligen Gasraum des zugeordneten Arbeitszylinders verbunden.

Mehrere Verdränger-Doppelzylinder können auch paketweise angeordnet sein und mindestens einen gemeinsamen kalten oder heißen Bereich aufweisen.

Durch eine Kombination von 2 Verdrängerzylindern zu Doppelzylindern und mehreren Doppelzylindern zu Zylinderpaketen kann die zugeführte Wärmeenergie besser genutzt und dadurch mehr Energie bei geringem Bauraum erzeugt werden.

Bei einem Mehrzylinder-Stirlingmotor mit mehreren Verdränger-Doppelzylindern kann die Bewegungsumsetzeinrichtung bspw. ein Kurbeltrieb, bestehend aus Drehwelle, Kurbelrädern, Gelenkeinrichtung und Verdrängerpleuel sowie Arbeitskolbenpleuel , welche die Verdränger-Kolbenstangen mit einer radial exzentrisch an einer Drehwelle angebrachten Gelenkeinrichtung, insbesondere Kurbeln, mechanisch koppelt und/oder nach der ersten Alternative die Bewegungsumsetzeinrichtung Pleuel umfasst, das den gemeinsamen Arbeitskolben mit einer radial exzentrisch an der Drehwelle angebrachten Gelenkeinrichtung, insbesondere einer Kurbel, mechanisch koppelt, oder nach der zweiten Alternative die Bewegungsumsetzeinrichtung zwei Pleuel umfasst, die jeweils einen anderen der beiden Arbeitskolben mit einer radial exzentrisch an der Drehwelle angebrachten Gelenkeinrichtung insbesondere einer Kurbel, mechanisch koppeln.

Es kann auch sein, dass das Pleuel der Kopplungseinrichtung und das/die Pleuel der Bewegungsumsetzeinrichtung mit derselben radial exzentrisch an der Drehwelle angebrachten Gelenkeinrichtung, insbesondere einer Kurbel, zur mechanischen Kopplung verbunden sind.

Vorteilhafterweise sind die Verdrängerachse und die Arbeitsachse senkrecht zur Drehachse der Drehwelle ausgerichtet, um einen optimalen Wirkungsgrad zu erzielen.

Als Arbeitsgas eignen sich leichte Gase, die schnell Wärme transportieren, gut. Insbesondere kann Helium als Arbeitsgas dienen. Weiterhin können die Verdrängerkolben als Regenerator ausgebildet sein

Es kann günstig sein, dass die ein Stirlingmotor mit mindestens 4 Verdrängerzylindern, insbesondere dessen Drehwelle, schwungradfrei ist.

Besonders vorteilhaft erscheint, dass ein solcher Motor als Ultra-Niedrigtemperatur-Stirlingmotor bereits nennenswert Energie erzeugt, wenn die Temperatur des Bereichs für das heiße Arbeitsgas zwischen 70°C und 140°C, bevorzugt zwischen 80°C und 120°C liegt und der kalte Bereich zwischen 10 - 70°C, wobei eine Temperaturdifferenz ab 60°C sinnvoll ist und mit größerer Differenz die Energieausbeute steigt.

Bei einem Mehrzylinder-Stirlingmotor mit nebeneinanderliegenden Verdrängerzylindern ist es vorteilhaft, wenn die Drehwelle als Gesamtdrehwelle ausgebildet ist, und Auslenkungen der Verdrängerkolben benachbarter Verdrängerzylinder jeweils um 1/n des Hubwegs der Verdrängerkolben zueinander versetzt sind bzw. sie einen Taktversatz von 180/n Grad zueinander haben.

Für den erfindungsgemäßen Einsatz ist es vorteilhaft, wenn der Stirlingmotor ein Platten-Stirlingmotor ist, bei dem die räumlich benachbarten heißen Platten als eine durchgängige heiße Platte ausgebildet sind und/oder benachbarte kalte Platten als eine durchgängige kalte Platte ausgebildet sind.

Mehrere Doppelzylinder können auch einem gemeinsamen Arbeitszylinder zugeordnet sein.

Die erfindungsgemäßen Stirlingmotoren eignen sich unter anderem zum Einsatz in Elektroenergie-Erzeugungssystemen mit einem an die Drehwelle des Stirlingmotors gekoppelten Elektrogenerator zur Umwandlung der Rotationsenergie der Welle des Stirlingmotors in elektrische Energie, können aber auch Pumpen antreiben oder sonstige Arbeit verrichten. Es ist aber auch möglich, diese Stirlingmotoren extern anzutreiben und so Kälte in der kalten Platte zu generieren - d.h. sie als Kältemaschinen einzusetzen.

Nachfolgend wird die Erfindung anhand der Zeichnung und Ausführungsbeispielen näher erläutert, auf die sie aber keinesfalls beschränkt sein soll. Darin zeigen:
- **Fig. 1 A**: eine schematische Darstellung eines bekannten Stirlingmotors.
- **Fig. 1 B**: eine schematische Darstellung einer Ausführungsform des erfindungsgemäßen Stirlingmotors;
- **Fig. 2A bis 2D**: verschiedene Zustände während eines Arbeitszyklus des Stirlingmotors nach Fig. 1B
- **Fig. 3**: einen erfindungsgemäßen Stirlingmotoren mit 2 gegenüberliegenden Verdrängerzylindern und einem gemeinsamen Arbeitszylinder
- **Fig. 4**: einen erfindungsgemäßen Mehrzylinder-Stirlingmotor (in einem horizontalen Schnitt) mit vier Verdrängerzylindern
- **Fig. 5**: einen erfindungsgemäßen Stirlingmotor mit einem Verdränger-Doppelzylinder mit einer durch beide Verdrängerzylinder gemeinsam genutzten heißen Platte
- **Fig. 6**: eine weitere Ausführungsform des Stirlingmotors mit zwei gegenüberliegenden, über eine gemeinsame Kolbenstange gekoppelte Verdränger-Doppelzylindern
- **Fig. 7**: eine weitere Ausführungsform eines erfindungsgemäßen Stirlingmotors in Paketbauweise mit zwei Verdränger-Doppelzylindern, mit jeweils einer gemeinsamen heißen Platte
- **Fig. 8 A, B und C**: einen erfindungsgemäßen Aufbau eines Verdrängerzylinders mit magnetischer Kopplung des Kolbens an die Kolbenstange sowie je einen Querschnitt durch den Verdrängerzylinder außerhalb seines Kolbens und durch seinen Kolben.
- **Fig. 9**: einen erfindungsgemäßen Stirlingmotor mit einem Verdrängerzylinder, dessen Arbeitskolben über eine käfigartige Konstruktion, die magnetisch an den Kolben ankoppelt.
- **Fig. 10**: einen erfindungsgemäßen Stirlingmotor, dessen Arbeitskolben mit einem magnetischen Bereich durch seine oszillierende Bewegung eine Generator-Wicklung erregt und Wechselstrom erzeugt;
- **Fig. 11 A und B**: einen erfindungsgemäßen Stirlingmotor, dessen Kolbenstange an ihrem freien Ende einen Magneten aufweist, der in einer um ihren außenliegenden Endbereich angeordnete Generatorwicklung elektrische Energie erzeugt; und
- **Fig. 12 A und B**: einen erfindungsgemäßen Stirlingmotor, dessen Arbeitskolben durch seine Bewegung eine außenliegende Zahnstange bewegt, die mit einem Zahnrad, das die Bewegungsenergie aufnimmt und dadurch einen Generator bewegt

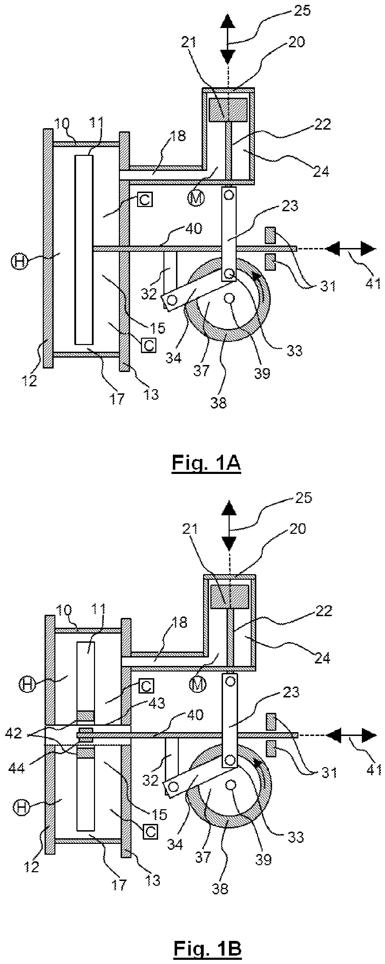

Wie aus Fig. 1A, die einen herkömmlichen Stirlingmotor zeigt, ersichtlich, läuft in einem Verdrängerkolben 10 mit einer heißen Platte 12 und einem entsprechenden heißen Bereich (H) sowie einer kalten Platte 13 und einem entsprechenden kalten Bereich (C ein Verdrängerkolben 11, der von einer mit einem Antrieb (hier ein Kurbeltrieb mit 23, 32, 33, 34, 39 verbundenen Kolbenstange 40 hin und her bewegt wird. Diese Kolbenstange 40 muss gegen den notwendigen Durchbruch durch die kalte Platte 13 abgedichtet werden.

Fig. 1B zeigt die erfindungsgemäße Weiterentwicklung mit magnetischer Ankopplung der Verdrängerkolbenstange 40 an den Verdrängerkolben 11, der in einem erfindungsgemäß als Hohlzylinder ausgebildeten Verdrängerzylinder 10 läuft. Durch die magnetische Anbindung durch die Innenwand des als Holzylinder ausgebildeten Verdrängerzylinders 10 entfällt die bisher notwendige Abdichtung der Verdrängerzylinder-Kolbenstange 40, die nun in einem hohlen Kanal 43 im Verdrängerzylinder bewegt wird. Deutlich erkennt man den zentralen zylindrischen magnetischen Bereich 42 des ringförmigen Verdrängerkolbens 11, der an einen magnetischen oder magnetisierbaren Bereich 44 an der Verdrängerkolbenstange 40 gekoppelt ist.

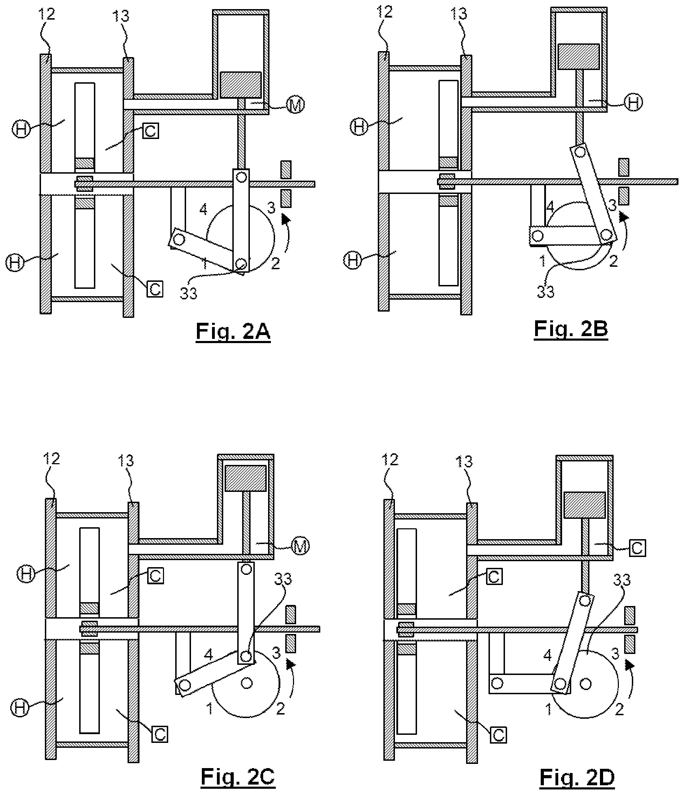

In Fig. 2A bis D ist die Abfolge der 4 Arbeitstakte eines Arbeitszyklus (eine vollständige Umdrehung der Drehwelle) des in Fig. 1B gezeigten Stirlingmotors dargestellt. Zum besseren Verständnis wurden einige Bezugszeichen aus Fig. 1B weggelassen, zusätzlich wurden die von der Gelenkeinrichtung 33 zu durchlaufende Winkelpositionen mit den Bezugszeichen 1, 2, 3, 4 bezeichnet.

Fig. 2A zeigt den ersten Takt des Arbeitszyklus (Bewegung von der Winkelposition 1 zu der Winkelposition 2. Der Arbeitskolben 21 wird durch seinen unteren Totpunkt bewegt, wofür die im Schwungrad 38 gespeicherte Energie benötigt wird und der ringförmige Verdrängerkolben 11 bewegt sich mittig im Verdrängerzylinder 10 in Richtung der kalten Platte 13 und verschiebt damit das Arbeitsgas in Richtung heißer Bereich (H), wodurch sich das Arbeitsgas aufheizt und damit eine Druckerhöhung im System bewirkt, welche den Arbeitskolben 21 nach oben drückt.

In dem in Fig. 2B veranschaulichten zweiten Takt des Arbeitszyklus (Bewegung von der Winkelposition 2 zu der Winkelposition 3 wird der Verdrängerkolben 11 bis fast an die kalte Platte 13 geschoben und damit das Arbeitsgas zum größten Teil in den heißen Bereich (H) und damit wird der Arbeitskolben 21, aufgrund der weiter ansteigenden Druckerhöhung, in Richtung oberer Totpunkt gedrückt und verrichtet dabei Arbeit.

Fig. 2C zeigt den dritten Takt des Arbeitszyklus (Bewegung von der Winkelposition 3 zu der Winkelposition 4. Der Arbeitskolben 21 wird mit Hilfe der in dem Schwungrad 38 gespeicherten Energie durch den oberen Totpunkt bewegt. Der Verdrängungskolben 11 wird nun entlang der Verdrängungsachse Richtung heiße Platte 12 verschoben und somit das Arbeitsgas vom heißen Bereich (H) in den kalten Bereich (C. Daher beginnt das Arbeitsgas, sich abzukühlen und einen Unterdruck zu erzeugen.

In dem in Fig. 2D dargestellten vierten Takt des Arbeitszyklus (Bewegung von der Winkelposition 4 zu der Winkelposition 1 wird der Arbeitskolben 21 aufgrund des erzeugten Unterdrucks im System in Richtung des unteren Totpunkts gezogen und verrichtet dabei Arbeit. Der Verdrängungskolben 11 wird nah zur heißen Platte 12 bewegt und verschiebt somit das Arbeitsgas fast komplett in den kalten Bereich (C, so dass die Abkühlung fortgesetzt wird. Durch den damit anwachsenden Unterdruck wird der Arbeitskolben 21 Richtung unterer Totpunktgezogen und verrichtet Arbeit. Im Folgenden schließt sich der nächste Takt 1 an.

Dieser Zyklus, bei dem Verdränger -und Arbeitszylinder zeitlich um ca. 25% der Dauer eines Arbeitszyklus versetzt ihre Extrempositionen erreichen, wird durch die thermische Gasausdehnung und -kompression Wärmeenergie, die der heißen Platte zugeführt wird, in mechanische Energie umgewandelt.

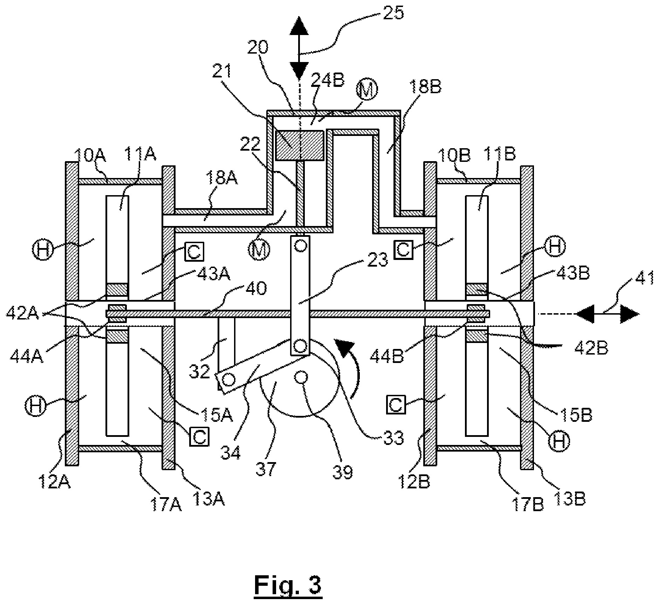

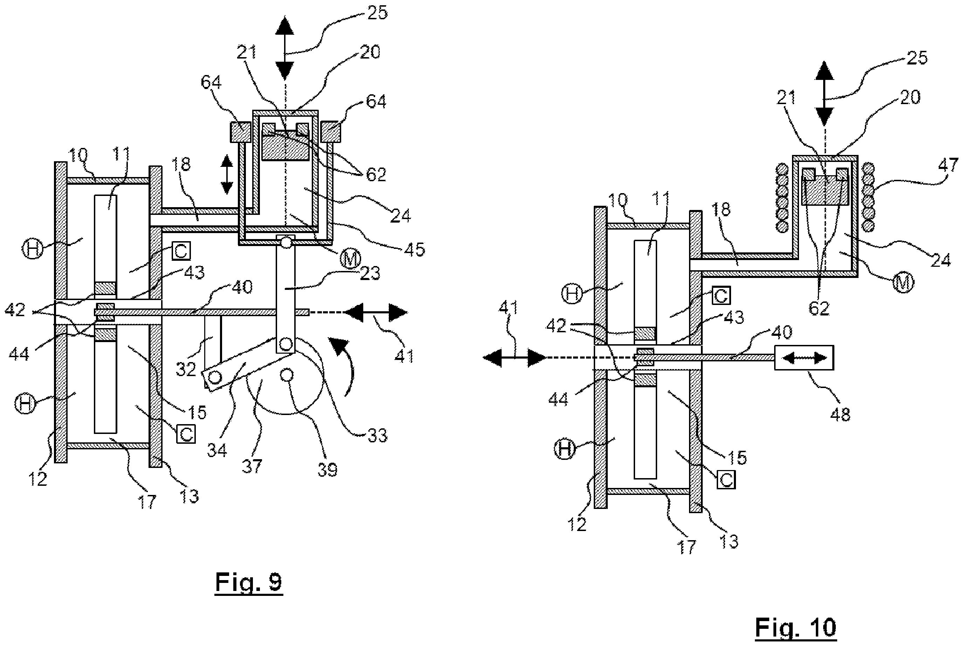

Die folgenden Fig. 3 bis 7 zeigen nicht einschränkende Ausführungsbeispiele erfindungsgemäßer Mehrzylinder-Stirlingmotoren, die alle mit Hohlwand-Verdrängerzylinder 10 und magnetischer Kopplung der Verdrängerkolben 11 an die Kolbenstange/n 40 mittels Ringmagneten oder magnetisierbarem Material 42 an der Kolbenstange sowie Ringmagneten oder magnetisierbarem Material 44 in den Verdrängerkolben 11 ausgestattet sind, wobei mindestens eine der beiden Komponenten 42 und 44 ein Ringmagnet ist. Weiterhin enthalten diese Ausführungsbeispiele alle als Bewegungsumsetzeinrichtung einen Kurbeltrieb, bestehend aus Arbeitskolbenpleuel/n 23, Fortsatz/Fortsätze 32, Gelenkeinrichtung/en 33, Verdrängerpleuel/n 34, Kurbelrad/Kurbelrädern 37 und genau einer gemeinsamen Drehachse 39. Es sei jedoch ausdrücklich darauf hingewiesen, dass bei allen Ausführungsbeispielen in den Fig. 3 bis 7 die Bewegungsumsetzeinrichtung mittels Kurbeltrieb auch bspw. mit den in Fig. 10 bis 12 gezeigten technischen Lösungen ersetzt werden kann.

Dabei wird unter Ringmagnet sowohl ein magnetischer Ring als auch ringförmig und symmetrisch zur Kolbenstange angeordnete Einzelmagnete verstanden, die eine zentrische Führung einer Kolbenstange ermöglichen.

Um unnötige Wiederholungen zu vermeiden, werden diese grundlegenden, aber immer wieder gleichen technischen Details nicht bei jeder Beschreibung einer Figur wiederholt.

In Fig. 3 ist eine erfindungsgemäße Ausführungsform eines Stirlingmotors dargestellt mit zwei gegenüberliegenden Verdrängerzylindern 10A, 10B, einem gemeinsamen Arbeitszylinder 20, einer durchgehenden Verdränger-Kolbenstange 40, an die beide Verdrängerkolben 11A, 11B magnetisch gekoppelt sind und einer mechanischen Bewegungsumsetzeinrichtung in Form eines Kurbeltriebs, bestehend aus Arbeitskolbenpleuel 23, Fortsatz 32, Gelenkeinrichtung 33, Verdrängerpleuel 34, Kurbelrad 37 und Drehachse 39. Durch die gegenüberliegende Verdrängeranordnung arbeiten die Verdränger um 180° phasenversetzt und sind daher entsprechend am Arbeitszylinder und der Kurbelwelle angeschlossen.

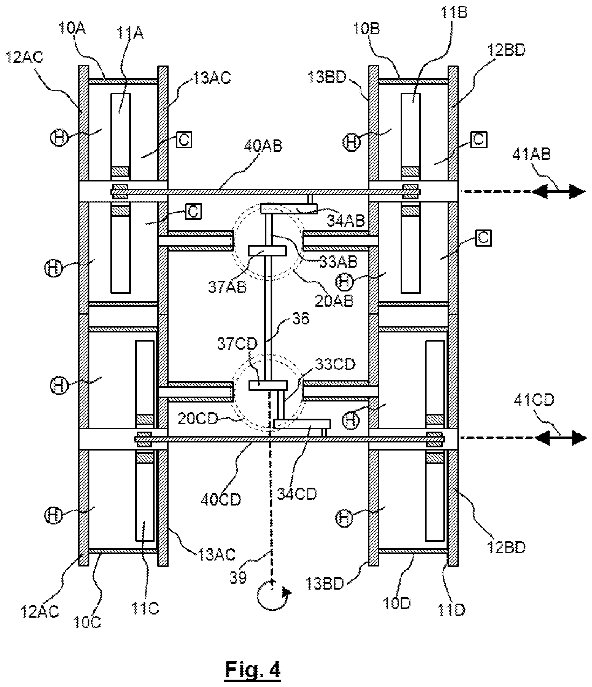

Fig. 4 zeigt eine Ausführungsform für einen erfindungsgemäßen Mehrzylinder-Stirlingmotor (in einem horizontalen Schnitt) mit vier Verdrängerzylindern 10A, 10B, 10C, 10D, davon jeweils zwei gegenüberliegend 10A und 10B; 10C und 10D, wobei jeweils die beiden nebeneinander positionierten eine gemeinsame heiße und eine gemeinsam kalte Platte besitzen, und zwei Arbeitszylindern 20AB, 20CD, wobei jedem Paar von gegenüberliegenden Verdrängerzylindern ein Arbeitszylinder zugeordnet ist. Gegenüberliegende Verdrängerzylinder haben je eine gemeinsame Kolbenstange 40AB: 40CD, die über einen für alle Verdrängerzylinder gemeinsamen Kurbeltrieb 36, 37AB, 37CD, 33AB, 33CD, 34AB, 34CD angetrieben werden. Durch den Taktversatz der gegenüberliegenden Verdrängerzylinder um jeweils 180° und den Taktversatz der nebeneinanderliegenden Verdrängerzylinder um jeweils 90° ergibt sich insgesamt ein Taktversatz zwischen den Verdrängerzylindern um 90°, so dass jeweils wenn ein Arbeitszylinder durch einen Totpunkt bewegt werden muss, ein anderer Arbeitszylinder volle Leistung liefert und dadurch auf ein Schwungrad verzichtet werden kann.

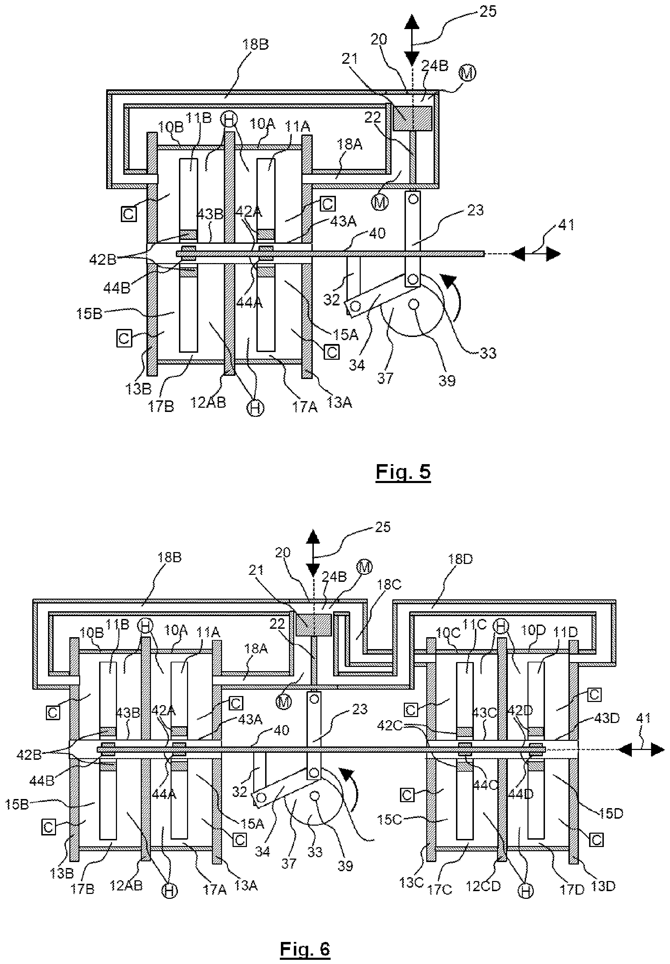

Fig. 5 zeigt ein Ausführungsbeispiel eines erfindungsgemäßen Stirlingmotors mit einem Hohlmantel-Verdränger-Doppelzylinder 10A und 10B, der eine gemeinsam genutzte heiße Platte 12AB aufweist. Dieses Beispiel entspricht im Wesentlichen dem Ausführungsbeispiel in Fig. 3, mit dem einzigen Unterschied, dass dort zwei die beiden Verdrängerzylinder 10A und 10B nicht als Doppelzylinder ausgebildet, sondern gegenüber angeordnet sind. Insofern sei, um Wiederholungen zu vermeiden, auf die detaillierte Beschreibung von Fig. 3 verwiesen.

In Fig. 6 ist ein Ausführungsbeispiel eines erfindungsgemäßen Stirlingmotors mit zwei Hohlmantel-Verdränger-Doppelzylindern 10A/10B sowie 10C/10D, dargestellt, die jeweils eine gemeinsame heiße Platte 12AB und 12CD aufweisen. Alle vier Verdrängerkolben 11A, 11B, 11C, 11D der beiden Doppelzylinder werden über eine gemeinsame starre Kolbenstange 40 bewegt, an welche die Kolben magnetisch gekoppelt sind, wie auch in den oben Ausführungsformen.

Alle Verdrängerzylinder teilen sich einen gemeinsamen doppelt wirkenden Arbeitszylinder 20, mit dem sie jeweils über eine Gasleitung 18A, 18B, 18C, 18D verbunden sind. Weiterhin ist auch hier eine Bewegungsumsetzeinrichtung in Form eines Kurbeltriebs enthalten, bestehend aus Arbeitskolbenpleuel 23, Fortsatz 32, Gelenkeinrichtung 33, Verdrängerpleuel 34, Kurbelrad 37 und Drehachse 39. Durch die gegenüberliegende Verdrängeranordnung arbeiten die Verdränger-Doppelzylinder um 180° phasenversetzt und sind daher entsprechend am Arbeitszylinder und der Kurbelwelle angeschlossen.

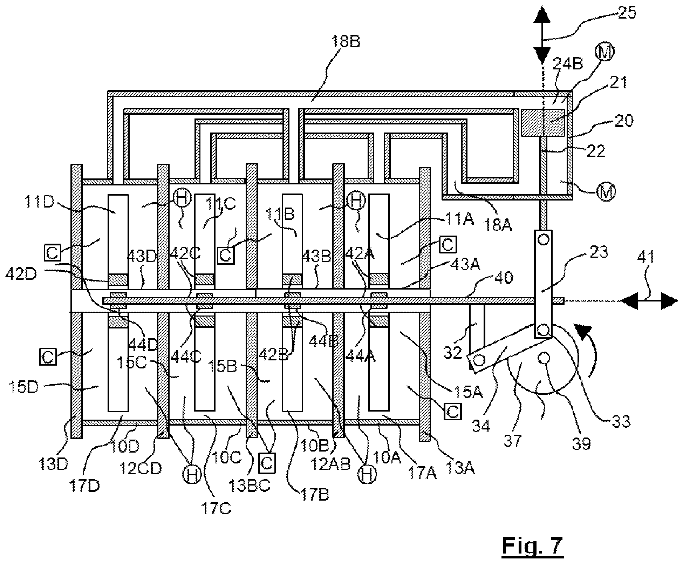

Fig. 7 zeigt eine weitere Ausführungsform der Erfindung mit 2 Hohlmantel-Verdränger-Doppelzylindern 10A/10B sowie 10C/10D. Sie unterscheidet sich von der in Fig. 6 gezeigten grundsätzlich nur darin, dass die beiden Doppelzylinder nicht gegenüberliegend sondern in Paketbauweise angeordnet sind und daher nicht nur zwei heiße Platten 12AB und 12CD von zwei Verdrängerzylindern gemeinsam genutzt werden, sondern zusätzlich die kalte Platte 13BC. Zuweisung der einzelnen Verdrängerzylinder zum Arbeitszylinder sowie Bewegungsumsetzeinrichtung sind analog zu dem in Fig. 6 beschriebenen Ausführungsbeispiel.

Beim Vergleich von Fig. 5, Fig. 6 und Fig.7 wird deutlich, dass das gezeigte Doppelzylinder- und Paket-Prinzip skalierbar ist, indem die Doppelzylinder-Pakete jeweils aus einem oder mehr Doppelzylindern aufgebaut werden.

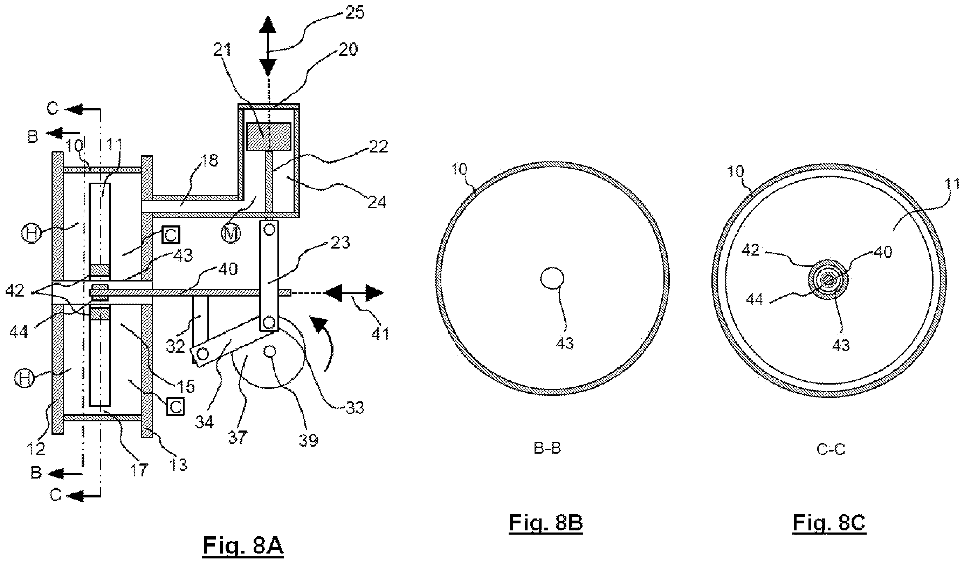

Die Fig. 8 A, B und C zeigen den erfindungsgemäßen Aufbau eines Verdränger-zylinders 10 mit magnetischer Kopplung des Verdrängerkolbens 11 an die Kolbenstange 40. In Fig. 8A ist ein Längsschnitt durch einen Stirlingmotor mit einem Verdrängerzylinder und einem Arbeitszylinder zu sehen, in Fig. 8B ein Querschnitt entlang B - B der Fig. 8A durch den Verdrängerzylinder außerhalb seines Kolbens und in Fig. 8C ein Querschnitt entlang C - C der Fig.8A mit magnetischer Kopplung über einen Ringmagneten 42, das Rohr 43, den magnetischen Ring 44 und die Kolbenstange 40.

Aus Fig. 8A in Kombination mit Fig. 8B ist deutlich der Aufbau des Verdrängerzylinders 10 als Hohlmantelzylinder zu erkennen, in dem konzentrisch der ringförmige Verdrängerkolben 11 verschieblich angeordnet ist und in dessen zylindrischer zentraler Durchgangsöffnung die Verdrängerkolbenstange 40 verschieblich geführt und an den ringförmigen Verdrängerkolben 11 im Verdrängerzylinder magnetisch angekoppelt ist. Die magnetische Kopplung besteht aus einem zentrisch im Verdrängerkolben 11 befindlichen Ringmagneten oder einem Ring aus magnetisierbaren Material 42 sowie einem mit der Kolbenstange verbundenen Ringmagneten oder einem Ring aus magnetisierbaren Material 44, wobei mindestens eine dieser beiden Komponenten als Ringmagnet ausgebildet ist.

Da hiermit der Verdrängerkolben 11 mittels Magnetkraft im ringförmigen Verdränger-Zylinderraum bewegt wird, kann der gesamte Verdränger-Zylinderraum hermetisch nach außen abgedichtet werden und die Notwendigkeit zur Abdichtung der Kolbenstange entfällt.

Die Fig. 9 - 12 zeigen verschiedene Möglichkeiten der Energiegewinnung aus der oszillierenden Arbeitskolbenbewegung, die von der zyklischen Druckänderung des Arbeitsgases aufgrund des Stirling-Zyklus bewirkt wird, mittels magnetischer Kopplung des Arbeitskolbens an eine Kraftübertragung oder direkt an einen Lineargenerator. Dabei haben die meisten der gezeigten Ausführungsformen, nämlich die in Fig. 9, Fig. 10, Fig. 11A und Fig. 12A Fig. den großen Vorteil, dass neben der Kolbenstangendichtung des Verdrängerzylinders auch die des Arbeitszylinders entfällt.

Fig. 9 zeigt einen erfindungsgemäßen Stirlingmotor, dessen Arbeitskolben 21 mittels eines ersten magnetischen oder magnetisierbaren Ringes 62 an eine käfigartige Führungseinrichtung 45 mit einem zweiten Ringmagneten oder magnetisierbaren Ring 64 ankoppelt, wobei mindestens einer der beiden Ringe 62, 64 als Ringmagnet ausgebildet ist. Über die käfigartige Führungseinrichtung 45 für den Ringmagneten oder magnetisierbaren Ring wird die Arbeit, die der Arbeitskolben 21 aufgrund der zyklischen Druckänderungen des Arbeitsgases verrichtet, über ein Pleuel 23 an ein Kurbelrad 37 eines Kurbeltriebs übertragen und die Drehwelle 39 in eine Rotationsbewegung versetzt, womit ein Generator in üblicher Weise zur Erzeugung von (elektrischer) Energie angetrieben werden kann. In dieser Ausführungsform wird ein Teil der vom Arbeitskolben erzeugten Arbeit auch zur oszillierenden Bewegung des Verdrängerkolbens 11 genutzt, indem die Rotationsbewegung der Drehwelle mittels Verdrängerkolbenpleuel 37 und Fortsatz 32 die Verdränger-Kolbenstange 40 und damit auch den magnetisch angekoppelten Verdrängerkolben 11 oszillierend bewegt.

Fig. 10 zeigt einen erfindungsgemäßen Stirlingmotor, wobei durch den Arbeitskolben 21 mit einem magnetischen Bereich 62, der durch die zyklischen Druckänderungen des Arbeitsgases in eine oszillierende Bewegung versetzt wird, direkt eine auf dem Arbeitszylinder außen angebrachte Generator-Wicklung 47 erregt und Wechselstrom erzeugt wird.

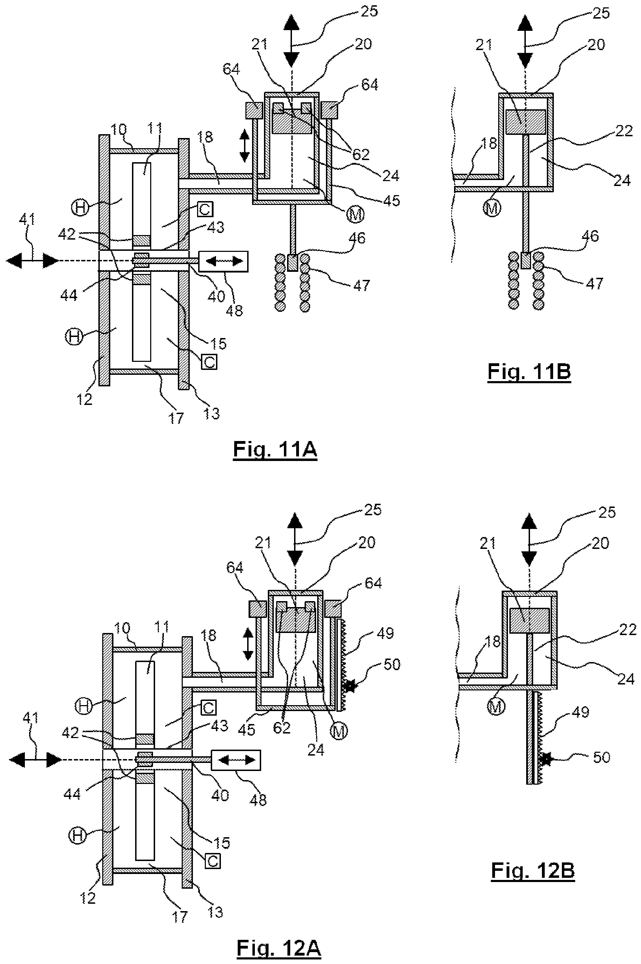

Die Fig. 11 A zeigt einen erfindungsgemäßen Stirlingmotor, wobei dessen Arbeitskolbenbewegung über einen Ringmagneten oder magnetisierbaren Ring 62 von einer außenliegenden Führungseinrichtung 45 mit einem Ringmagneten oder magnetisierbaren Ring 64 abgegriffen wird, wobei mindestens einer der beiden Ringe 62, 64 als Ringmagnet ausgebildet ist. Die Oszillation des Arbeitskolbens 21 aufgrund der zyklischen Druckänderungen des Arbeitsgases wird auf die Führungseinrichtung 45 übertragen, welche am freien Ende einen Fortsatz mit einem magnetischen Bereich 46 aufweist, der eine außenliegend angeordnete Generatorwicklung 47 erregt und damit Wechselstrom erzeugt.

Fig. 11B wiederum zeigt einen üblichen Arbeitskolben 21 mit abgedichteter Kolbenstange, die an ihrem freien Ende einen Magneten 46 aufweist, der vom Arbeitskolben 21 oszillierend in einer Generatorwicklung 47 bewegt wird. Durch die Bewegung des Magneten 46 in der Wicklung wird wiederum Wechselstrom erzeugt. Diese Ausführungsform ist auch bei klassischen Kolben ohne Magnetkopplung einsetzbar.

Fig. 12A zeigt eine weitere Möglichkeit der Energieabnahme vom Arbeitskolben 21. In diesem Fall wird die außenliegende käfigartige Führungseinrichtung 45 per Magnetkraft, wie bei Fig. 11 A, magnetisch an den Arbeitskolben gebunden und mit diesem oszillierend bewegt. Die Energieerzeugung erfolgt dabei über ein System aus einer Zahnstange 49 und einem Ritzel 50, wobei das Ritzel eine in der Drehrichtung wechselnde Drehbewegung durch die Zahnstangenbewegung erfährt, welche wiederum in an sich bekannter Weise Rotationsenergie liefert, die beispielsweise einen Generator antreiben und damit Wechselstrom erzeugen kann.

In Fig. 12B ist eine alternative Anordnung einer Zahnstange 49 an der Arbeitszylinder-Kolbenstange 22 schematisch gezeigt. Analog zu der in Fig. 12A beschriebenen Möglichkeit wird auch bei dieser Alternative das Ritzel 50 in ein in der Drehrichtung wechselnde Drehbewegung durch die Zahnstangenbewegung versetzt, welche wiederum in an sich bekannter Weise Rotationsenergie liefert, die beispielsweise einen Generator antreiben und damit Wechselstrom erzeugen kann.

Bei einer weiteren Ausführungsform der erfindungsgemäßen Stirlingmaschine wird der Stirling-Prozess elektronisch gesteuert bezüglich Taktfrequenz und/oder Taktversatz zwischen Verdrängerkolben und Arbeitskolben und/oder Hubweg der Verdrängerkolben und/oder Arbeitskolben.

Bereits mit einem Stirlingmotor mit Verdränger-Doppelzylindern und Doppelzylinder-Paketen kann viel mechanische Energie und damit auch elektrische Energie aus Wärmeenergie im Niedertemperaturbereich (unter 150°C) gewonnen werden.

Durch die Verwendung einer magnetischen Kopplung zwischen dem Verdrängerkolben und dessen Kolbenstange und ggf. dem Arbeitskolben und der Energieerzeugung kann die Ausbeute an elektrischer Energie nochmals deutlich gesteigert werden, da durch die erheblich bessere Abdichtung der Zylinder der Motor mit einem wesentlich höheren Ladedruck aufgeladen werden kann und sich somit die Gasdichte in Arbeits- und Verdrängerzylindern erhöht, was zu einer wesentlich schneller Erwärmung des Arbeitsgases führt und damit zu einer deutlichen Drehzahlsteigerung.

Während oben als Beispiel dienende Ausführungsformen beschrieben sind, ist nicht beabsichtigt, dass diese Ausführungsformen alle möglichen Formen der Erfindung beschreiben sollen. Stattdessen sind die in der Spezifikation verwandten Wörter beschreibender, und nicht einschränkender Natur und es versteht sich, dass verschiedene Veränderungen vorgenommen werden können, ohne vom Sinn und Umfang der Erfindung abzuweichen. Zusätzlich können die Merkmale verschiedener Umsetzungen von Ausführungsformen kombiniert werden, um weitere Ausführungsformen der Erfindung zu bilden.

## Patentansprüche

1. Stirlingmotor mit
mindestens einem Verdrängerzylinder (10), wobei jeder Verdrängerzylinder einen eine heiße Platte (12) aufweisenden heißen Bereich (H) und einen eine kalte Platte (13) aufweisenden kalten Bereich (C) aufweist sowie einen zwischen diesen Bereichen entlang einer Verdrängerachse (41) durch eine Verdrängerkolbenstange (40) bewegbaren Verdrängerkolben (11) und
mindestens einem Arbeitszylinder (20) mit einem Arbeitskolben (21); wobei jedem Verdrängerzylinder ein Arbeitszylinder (20) zugeordnet ist und durch eine im / in den Verdrängerzylinder/n (10) entstehende Druckänderung eines Arbeitsgases im zugeordneten Arbeitszylinderzylinder der Arbeitskolben (21) entlang einer Arbeitsachse (25) bewegbar ist,
einer Bewegungsumsetzeinrichtung zum Umsetzen der Bewegung des / der Arbeitskolben entlang der Arbeitsachse/n (25) in Energie,
einer Linearbewegungseinrichtung zum Antrieb der Bewegung des / der Verdrängerkolbenstange/n (40) mit Verdrängerkolben (11) entlang der Verdrängerachse/n (41), wobei der gasdurchlässige Verdrängerkolben dadurch das Arbeitsgas abwechselnd zwischen dem heißen Bereich (H) und kalten Bereich (C) des Verdrängerzylinders verschiebt und die entstehende Arbeitsgasdruckänderung über eine Gasleitung (18) in den mindestens einen Arbeitszylinder (20) weitergegeben wird, wodurch der Arbeitskolben (21) entlang der Arbeitsachse bewegt wird, **dadurch gekennzeichnet,**
**dass** der mindestens eine Verdrängerzylinder (10) als Hohlmantelzylinder ausgebildet ist, in dem konzentrisch ein ringförmiger Verdrängerkolben (11) verschieblich angeordnet ist, und
**dass** in der zylindrischen Durchgangsöffnung des mindestens einen Hohlmantel-Verdrängerzylinders (10) eine Verdrängerkolbenstange (40) verschieblich geführt und an den zugehörigen Verdrängerkolben (11) über mindestens einen ersten Ringmagneten (42 und / oder 44) magnetisch gekoppelt ist.

2. Stirlingmotor nach Anspruch 1, **dadurch gekennzeichnet, dass** er ein Mehrzylinder-Stirlingmotor mit mindestens einem, eine gemeinsame heiße Platte (12, 12AB; 12CD) oder eine gemeinsame kalte Platte (13; 13BC) aufweisenden Verdränger-Doppelzylinder ist, der
ein Paar von einander spiegelsymmetrisch zur sich senkrecht zu einer Verdrängerachse (41) erstreckenden Spiegelebene gegenüberliegenden Verdrängerzylindern (10A, 10B; 10C, 10D) aufweist, wobei
nach einer ersten Alternative jedem Verdrängerzylinder eines Verdränger-Doppelzylinders mindestens ein gemeinsamer Arbeitszylinder (20) zugeordnet ist, oder
nach einer zweiten Alternative jedem Verdrängerzylinder eines Verdränger-Doppelzylinders mindestens ein separater Arbeitszylinder (20A, 20B) zugeordnet ist,
wobei ggf. mindestens zwei Verdränger-Doppelzylinder mindestens eine gemeinsame kalte Platte (13) oder gemeinsame heiße Platte (12) aufweisen.

3. Stirlingmotor nach einem der vorangehenden Ansprüche, **dadurch gekennzeichnet, dass** jeder Arbeitskolben (21) einen längsachssymmetrischen magnetischen oder magnetisierbaren Bereich (62) aufweist und mit mindestens einer auf der Arbeitszylinderaußenwand verschieblich angeordneten magnetischen oder magnetisierbaren Einrichtung (64), die betrieblich mit der Bewegungsumsetzeinrichtung verbunden ist, magnetisch gekoppelt ist.

4. Stirlingmotor nach einem der Ansprüche 1 - 3, **dadurch gekennzeichnet, dass** jeder Arbeitskolben (21) mindestens einen dauermagnetischen Außenbereich (40) aufweist, wobei zur Erzeugung elektrischer Energie eine Generator-Drahtwicklung (47) aus leitfähigem Material auf der Arbeitszylinderaußenwand angeordnet ist.

5. Stirlingmotor nach einem der Ansprüche 1 - 3, **dadurch gekennzeichnet, dass** jeder Arbeitszylinder (20) einen Arbeitskolben (21) aufweist, dessen Arbeitszylinder-Kolbenstange (22) einen magnetischen freien Endbereich (46) aufweist, der in einer Generatordrahtwicklung (47) aus leitfähigem Material zur Erzeugung elektrischer Energie hin- und herbewegbar ist.

6. Stirlingmotor nach einem der Ansprüche 1 - 3, **dadurch gekennzeichnet, dass** jede Arbeitszylinder-Kolbenstange (22) oder jeder Magnetring (64) mit einer Zahnstange (49) verbunden ist, die in üblicher Weise mechanisch an einen Generator angebunden ist.

7. Stirlingmotor nach einem der vorangehenden Ansprüche, **dadurch gekennzeichnet, dass** alle Verdrängerkolben (11) oszillatorisch über einen oder mehrere elektrisch betriebene Linearantriebe (48), angetrieben werden oder mechanisch an den jeweils zugeordneten Arbeitskolben (20) durch die Bewegungsumsetzeinrichtung gekoppelt sind und dadurch oszillatorisch bewegt werden.

8. Stirlingmotor nach einem der vorangehenden Ansprüche, **dadurch gekennzeichnet, dass** die mit dem mindestens einen Arbeitskolben (20) generierte Translationsenergie zumindest teilweise in eine andere Energieform umgewandelt wird.

9. Stirlingmotor nach einem der vorangehenden Ansprüche, **dadurch gekennzeichnet, dass** der Wärmetransport in die heiße/n Platte/n (12) und/oder aus der/den kalten Platte/n (13) mit Wärmerohren erfolgt.

10. Stirlingmotor nach einem der vorangehenden Ansprüche, **dadurch gekennzeichnet, dass** die kalte/n Platte/n (13) zur Wärmeabführung und/oder die heiße/n Platte/n (12) zur Wärmezuführung Dampfkammern (vapor chamber) aufweisen.

11. Stirlingmotor nach einem der vorangehenden Ansprüche, **dadurch gekennzeichnet, dass** die Verdrängerkolben (11) als Regeneratoren ausgebildet sind.

12. Stirlingmotor nach einem der vorangehenden Ansprüche, **dadurch gekennzeichnet, dass** er als Niedertemperatur-Stirlingmotor Energie erzeugt, auch wenn die Temperatur des Bereichs für das heiße Arbeitsgas zwischen 70°C und 140°C, bevorzugt zwischen 80°C und 120°C liegt.

13. Stirlingmotor nach einem der vorangehenden Ansprüche, **dadurch gekennzeichnet, dass** die Auslenkungen der Verdrängerkolben (11, 11A, 11B, 11C, 11D) benachbarter Verdränger-Doppelzylinder jeweils um 1/n oder 2/n des Hubwegs der Verdrängerkolben (11) zueinander versetzt sind bzw. einen Taktversatz von 360/n oder 180/n Grad zueinander haben.

14. Stirlingmotor nach einem der vorangehenden Anspruche, **dadurch gekennzeichnet, dass** räumlich benachbarte heiße Platten (12A, 12C; 12B, 12D) als eine durchgängige heiße Platte ausgebildet sind und/oder benachbarte kalte Platten (13A, 13C; 13B, 13D) als eine durchgängige kalte Platte ausgebildet sind.

15. Stirlingmotor nach einem der vorhergehenden Ansprüche, **dadurch gekennzeichnet, dass** mehrere Verdränger-Doppelzylinder, insbesondere alle Doppelzylinder, die eine gemeinsame Verdrängerachse aufweisen und paketweise angeordnet sind, mindestens einem gemeinsamen Arbeitszylinder (20) zugeordnet sind.

## Claims

1. Stirling engine with at least one displacement cylinder (10), each displacement cylinder having a hot area (H) comprising a hot plate (12) and a cold area (C) comprising a cold plate (13), and a displacement piston (11) movable between these areas along a displacement axis (41) by a displacement piston rod (40), and at least one working cylinder (20) with a working piston (21); wherein each displacement cylinder is assigned a working cylinder (20) and the working piston (21) can be moved along a working axis (25) by a pressure change in the displacement cylinder(s) (10) of a working gas in the assigned working cylinder, a movement conversion device for converting the movement of the working piston(s) along the working axis (25) into energy, a linear movement device for driving the movement of the displacement piston rod(s) (40) with displacement piston (11) along the displacement axis(s) (41), wherein the gas-permeable displacement piston thereby shifts the working gas alternately between the hot area (H) and cold area (C) of the displacement cylinder and the resulting change in working gas pressure is passed on via a gas line (18) into the at least one working cylinder (20), whereby the working piston (21) is moved along the working axis, **characterized in that** the at least one displacement cylinder (10) is designed as a hollow shell cylinder in which an annular displacement piston (11) is arranged concentrically and displaceably, and **in that** a displacement piston rod (40) is displaceably guided in the cylindrical passage of the at least one hollow shell displacement cylinder (10) and is magnetically coupled to the associated displacement piston (11) via at least one first ring magnet (42 and/or 44).

2. Stirling engine according to claim 1, **characterized in that** it is a multi-cylinder Stirling engine with at least one double displacement cylinder having a common hot plate (12, 12AB; 12CD) or a common cold plate (13; 13BC) and comprising a pair of displacement cylinders (10A, 10B; 10C, 10D) facing each other in mirror symmetry with respect to the mirror plane extending perpendicularly to a displacement axis (41), wherein according to a first alternative, at least one common working cylinder (20) is assigned to each displacement cylinder of a double displacement cylinder, or according to a second alternative, at least one separate working cylinder (20A, 20B) is assigned to each displacement cylinder of a double displacement cylinder, wherein at least two double displacement cylinders have at least one common cold plate (13) or common hot plate (12).

3. Stirling engine according to one of the preceding claims, **characterized in that** each working piston (21) has a longitudinally symmetrical magnetic or magnetizable area (62) and is magnetically coupled to at least one magnetic or magnetizable device (64) which is displaceably arranged on the outer wall of the working cylinder and which is operational with the movement conversion device.

4. Stirling engine according to one of Claims 1 - 3, **characterized in that each** working piston (21) has at least one permanent-magnetic outer area (40), wherein a generator wire winding (47) made of conductive material is arranged on the outer wall of the working cylinder to generate electrical energy.

5. Stirling engine according to one of Claims 1 - 3, **characterized in that** each working cylinder (20) has a working piston (21), the working cylinder piston rod (22) of which has a magnetic free end area (46) which can be moved back and forth in a generator wire winding (47) made of conductive material to generate electrical energy.

6. Stirling engine according to one of Claims 1 - 3, **characterized in that** each working cylinder piston rod (22) or each magnetic ring (64) is connected to a toothed rack (49) which is mechanically connected to a generator in the usual way.

7. Stirling engine according to one of the preceding claims, **characterized in that** all displacement pistons (11) are driven in an oscillating manner via one or more electrically operated linear drives (48) or are mechanically coupled to the respectively assigned working piston (20) by the movement conversion device and are thereby moved in an oscillating manner.

8. Stirling engine according to one of the preceding claims, **characterized in that** the translational energy generated by the at least one working piston (20) is at least partially converted into another form of energy.

9. Stirling engine according to one of the preceding claims, **characterized in that** the heat is transferred into the hot plate(s) (12) and/or out of the cold plate(s) (13) with heat pipes.

10. Stirling engine according to one of the preceding claims, **characterized in that** the cold plate(s) (13) for dissipating heat and/or the hot plate(s) (12) for supplying heat have vapor chambers.

11. Stirling engine according to one of the preceding claims, **characterized in that** the displacement pistons (11) are designed as regenerators.

12. Stirling engine according to one of the preceding claims, **characterized in that** it generates energy as a low-temperature Stirling engine, even if the temperature range for the hot working gas is between 70°C and 140°C, preferably between 80°C and 120°C.

13. Stirling engine according to one of the preceding claims, **characterized in that** the deflections of the displacement pistons (11, 11A, 11B, 11C, 11D) of the adjacent double displacement cylinders are offset from each other by 1/n or 2/n of the stroke of the displacement pistons (11) or have a timing offset of 360/n or 180/n degrees from each other.

14. Stirling engine according to one of the preceding claims, **characterized in that** spatially adjacent hot plates (12A, 12C; 12B, 12D) are formed as a continuous hot plate and/or adjacent cold plates (13A, 13C; 13B, 13D) are formed as a continuous cold plate.

15. Stirling engine according to one of the preceding claims, **characterized in that** several double displacement cylinders, in particular all double cylinders which have a common displacement axis and are arranged in packages, are assigned to at least one common working cylinder (20).

## Revendications

1. Moteur Stirling comprenant
au moins un cylindre de déplacement (10), chaque cylindre de déplacement incluant une région chaude (H) munie d'une plaque chaude (12) et une région froide (C) dotée d'une plaque froide (13), ainsi qu'un piston de déplacement (11) mobile entre ces régions, le long d'un axe de déplacement (41), par l'intermédiaire d'une tige (40), et
au moins un cylindre de travail (20) pourvu d'un piston de travail (21) ; sachant qu'un cylindre de travail (20) est associé à chaque cylindre de déplacement, et que ledit piston de travail (21) peut être mû le long d'un axe de travail (25), dans le cylindre de travail associé, par une variation de pression d'un gaz de travail engendrée dans le(s) cylindre(s) de déplacement (10),
un dispositif convertisseur de mouvement conçu pour convertir, en de l'énergie, le mouvement du (des) piston(s) de travail le long de l'axe (des axes) de travail (25),
un dispositif à mouvement linéaire conçu pour entraîner, le long de l'axe (des axes) de déplacement (41), le mouvement de la (des) tige(s) (40) du (des) piston(s) de déplacement conjointement au(x)dit(s) piston(s) de déplacement (11), d'où il résulte que le piston de déplacement, perméable aux gaz, anime en alternance le gaz de travail entre la région chaude (H) et la région froide (C) du cylindre de déplacement, et que la variation engendrée dudit gaz de travail est transmise dans le cylindre de travail (20) à présence minimale, par l'intermédiaire d'un conduit de gaz (18), de sorte que le piston de travail (21) est mû le long de l'axe de travail,
**caractérisé par le fait**
**que** le cylindre de déplacement (10), à présence minimale, est réalisé sous la forme d'un cylindre à enveloppe creuse dans lequel un piston annulaire de déplacement (11) est logé à coulissement concentrique, et
**qu'**une tige (40) de piston de déplacement est guidée à coulissement dans l'orifice cylindrique de passage dudit cylindre de déplacement (10) à enveloppe creuse, à présence minimale, et est couplée magnétiquement au piston de déplacement (11) associé, par l'intermédiaire d'au moins un premier aimant annulaire (42 et/ou 44).

2. Moteur Stirling selon la revendication 1, **caractérisé par le fait qu'**il se présente comme un moteur Stirling à cylindres multiples, incluant au moins un cylindre double de déplacement qui est muni d'une plaque chaude (12, 12AB ; 12 CD) commune ou d'une plaque froide (13 ; 13BC) commune, et
comporte une paire de cylindres de déplacement (10A, 10B ; 10C, 10D) agencés en opposition mutuelle, avec symétrie spéculaire par rapport au plan de spécularité s'étendant perpendiculairement à un axe de déplacement (41), sachant que
conformément à une première variante, au moins un cylindre de travail (20) commun est associé à chaque cylindre de déplacement d'un cylindre double de déplacement, ou que,
conformément à une seconde variante, au moins un cylindre de travail (20A, 20B) distinct est associé à chaque cylindre de déplacement d'un cylindre double de déplacement,
au moins deux cylindres doubles de déplacement étant pourvus, le cas échéant, d'au moins une plaque froide (13) commune ou plaque chaude (12) commune.

3. Moteur Stirling selon l'une des revendications précédentes, **caractérisé par le fait que** chaque piston de travail (21) est muni d'une région (62) magnétique ou magnétisable, symétrique par rapport à l'axe longitudinal, et est couplé magnétiquement à au moins un dispositif (64) magnétique ou magnétisable, qui est agencé à coulissement sur la paroi extérieure du cylindre de travail et est en liaison opérante avec le dispositif convertisseur de mouvement.

4. Moteur Stirling selon l'une des revendications 1-3, **caractérisé par le fait que** chaque piston de travail (21) est doté d'au moins une région extérieure (40) à magnétisation permanente, sachant qu'un enroulement (47) de fil générateur, en un matériau conducteur, est implanté sur la paroi extérieure du cylindre de travail en vue d'engendrer de l'énergie électrique.

5. Moteur Stirling selon l'une des revendications 1-3, **caractérisé par le fait que** chaque cylindre de travail (20) est nanti d'un piston de travail (21), la tige (22) du piston dudit cylindre de travail présentant une région extrême libre (46) magnétique qui peut être animée de mouvements alternatifs, dans un enroulement (47) de fil générateur en un matériau conducteur, en vue d'engendrer de l'énergie électrique.

6. Moteur Stirling selon l'une des revendications 1-3, **caractérisé par le fait que** chaque tige (22) de piston du cylindre de travail ou chaque anneau magnétique (64) est relié(e) à une crémaillère (49) rattachée mécaniquement à un générateur, de manière habituelle.

7. Moteur Stirling selon l'une des revendications précédentes, **caractérisé par le fait que** tous les pistons de déplacement (11) sont entraînés en mode oscillant par l'intermédiaire d'un ou plusieurs entraînement(s) linéaire(s) (48) actionné(s) électriquement, ou sont couplés mécaniquement au piston de travail (20) respectivement associé, par le dispositif convertisseur de mouvement, et sont par conséquent mus en mode oscillant.

8. Moteur Stirling selon l'une des revendications précédentes, **caractérisé par le fait que** l'énergie de translation, engendrée par le piston de travail (20) à présence minimale, est au moins partiellement convertie en une autre forme d'énergie.

9. Moteur Stirling selon l'une des revendications précédentes, **caractérisé par le fait que** le transport de chaleur vers la (les) plaque(s) chaude(s) (12), et/ou à partir de la (des) plaque(s) froide(s) (13), s'opère au moyen de caloducs.

10. Moteur Stirling selon l'une des revendications précédentes, **caractérisé par le fait que** la (les) plaque(s) froide(s) (13) et/ou la (les) plaque(s) chaude(s) (12) comportent des chambres de vapeur *(vapor chamber)*, respectivement en vue de la dissipation de chaleur et de l'apport de chaleur.

11. Moteur Stirling selon l'une des revendications précédentes, **caractérisé par le fait que** les pistons de déplacement (11) sont réalisés sous la forme de régénérateurs.

12. Moteur Stirling selon l'une des revendications précédentes, **caractérisé par le fait qu'**il engendre de l'énergie en tant que moteur Stirling à basse température, également lorsque la température de la plage dédiée au gaz de travail chaud est comprise entre 70 °C et 140 °C, de préférence entre 80 °C et 120 °C.

13. Moteur Stirling selon l'une des revendications précédentes, **caractérisé par le fait que** les déflexions des pistons de déplacement (11, 11A, 11B, 11C, 11D) de cylindres doubles de déplacement voisins sont mutuellement décalées, à chaque fois, de 1/n ou 2/n de la course desdits pistons de déplacement (11) ou présentent respectivement, les unes vis-à-vis des autres, un décalage de synchronisation de 360/n ou 180/n degrés.

14. Moteur Stirling selon l'une des revendications précédentes, **caractérisé par le fait que** des plaques chaudes (12A, 12C ; 12B, 12D), voisines dans l'espace, sont conçues comme une plaque chaude continue, et/ou des plaques froides (13A, 13C ; 13B, 13D) voisines sont conçues comme une plaque froide continue.

15. Moteur Stirling selon l'une des revendications précédentes, **caractérisé par le fait que** plusieurs cylindres doubles de déplacement, notamment tous les cylindres doubles qui présentent un axe commun de déplacement et sont disposés par paquets, sont associés à au moins un cylindre de travail (20) commun.
